# EUROPÄISCHE PATENTSCHRIFT

(11) **EP 2 485 926 B1**
(45) Veröffentlichungstag und Bekanntmachung des Hinweises auf die Patenterteilung: **28.09.2016**
(21) Anmeldenummer: 10768436.7
(22) Anmeldetag: 08.10.2010
(51) Int. Cl.: B60S 1/38

(54) **WISCHBLATT**
WIPER BLADE
BALAI D'ESSUIE-GLACE

(30) Priorität: 09.10.2009 DE 102009045549; 07.10.2010 DE 102010042096
(43) Veröffentlichungstag der Anmeldung: 15.08.2012
(73) Patentinhaber: Robert Bosch GmbH, 70442 Stuttgart (DE)
(72) Erfinder: DE BLOCK, Peter, B-3545 Halen (BE); BONROY, Jan, B-3001 Heverlee (BE); CRIEL, Paul, B-3800 Sint-Truiden (BE); SAEVELS, Peter, B-3384 Attenrode (BE); AZNAG, Mohamed, B-3271 Scherpenheuvel-Zichem (BE); BEELEN, Hans, B-3540 Herk de Stad (BE); WINDMOLDERS, Eric, B-3510 Kermt (BE)
(86) Internationale Anmeldenummer: PCT/EP2010/065055
(87) Internationale Veröffentlichungsnummer: WO 2011/042518

(56) Entgegenhaltungen:
- EP-A1- 2 106 979
- DE-A1- 19 860 644
- DE-A1- 19 909 971
- DE-A1-102005 052 258
- DE-A1-102007 058 091
- DE-A1-102008 000 708
- FR-A1- 2 502 086
- US-A1- 2005 044 651

## Beschreibung

### Stand der Technik

Die Erfindung geht von einem Wischblatt nach dem Oberbegriff des Anspruchs 1 aus.

Aus der WO 2008/020003 ist ein Wischblatt mit einem lang gestreckten, federelastischen, konkav zu einer Fahrzeugscheibe vorgekrümmten Tragelement bekannt, das zwei Federschienen aufweist, und mit einer Wischleiste, die von dem Tragelement auswechselbar aufgenommen ist. Die Wischleiste ist an einem ihrer Enden mit einer Verdickung fest verbunden, mittels der die Wischleiste relativ zum Tragelement fixierbar ist. Dies geschieht dadurch, dass die Verdickung an einer Stirnseite der Federschiene oder an einer Brücke anlegbar ist, die die zwei Federschienen miteinander verbindet. In dieser Position wird die Wischleiste relativ zum Tragelement durch eine Endkappe fixiert. Diese kann die Verdickung und die Brücke übergreifen und durch lösbare Rastmittel in der Position fixieren. Im Falle der Demontage der Wischleiste des Wischblatts werden die Rastmittel gelöst, sodass nach Entfernung der Endkappe die Wischleiste aus dem Tragelement gezogen werden kann.

Aus der DE 10 2004 051 467 A1 ist ein Wischblatt bekannt. Sein Tragelement umfasst zwei parallel zueinander verlaufende Federschienen, die an ihren Enden durch eine Brücke miteinander verbunden sind. Zur Aufnahme einer Wischleiste bilden die Federschienen einen Längsspalt, sodass die Wischleiste in Längsrichtung auf das Tragelement aufgefädelt werden kann. Die Wischleiste wird in Längsrichtung relativ zum Tragelement durch Endkappen gesichert. Diese besitzen ein Element mit einem Dorn, der am Ende der Montage in eine Kopfleiste der Wischleiste gedrückt wird. In montiertem Zustand liegt der Dorn an der Stirnseite der Brücke an, die dem Ende der Wischleiste abgewandt ist. Bei einem Ausführungsbeispiel befindet sich der Dorn an einer Federzunge, die von einer Klappe mit einem Exzenter gegen die Kopfleiste gedrückt wird. Die Schwenkachse der Klappe verläuft quer zur Längsrichtung des Wischblatts. Bei einer anderen Ausführung ist der Dorn unmittelbar an der Klappe angeordnet, wobei die Schwenkachse der Klappe in der Nähe der äußeren Stirnwand der Endkappe vorgesehen ist.

Aus der DE 100 25 710 A1 ist ein Wischblatt in Flachbalkenbauweise bekannt, das eine gummielastische Wischleiste mit einer Wischlippe besitzt. Zwischen der Wischlippe und einer Kopfleiste sind seitliche Längsnuten vorgesehen, in die als Tragelement zwei zur Wischlippe konkav vorgekrümmte Federschienen eingesetzt sind. Diese werden durch Brücken an ihren Enden und durch ein mittleres Anschlusselement zusammengehalten. Die Brücken besitzen als Fixiermittel einen angeformten Fortsatz, der an seinem freien Ende mindestens einen zur Kopfleiste gerichteten Vorsprung aufweist. Bei der Montage wird der Fortsatz gegen die Kopfleiste gebogen, sodass der Vorsprung in die Kopfleiste eingreift und die Federschienen in Längsrichtung relativ zur Wischleiste fixiert. Die Brücken werden schließlich mit Endkappen abgedeckt.

Aus der DE 102 45 693 A1 ist ein Wischblatt bekannt, das als Tragelement zwei parallel verlaufende Federschienen aufweist, die an ihren Enden jeweils durch eine Brücke miteinander verbunden sind. Ferner sind Haltemittel vorgesehen, die die Wischleiste relativ zu den Federschienen fixieren. Zur Demontage der Wischleiste sind die Haltemittel leicht lösbar. Sie sind einerseits mit der Brücke und andererseits über einen Stoffschluss, einen Kraftschluss und/oder über einen Formschluss mit der Wischleiste verbunden. Bei einem Ausführungsbeispiel greift ein Dorn durch eine Führungsbohrung der Brücke in die Wischleiste und wird durch eine Endkappe, die durch ein Federelement an der Brücke verrastet, in der Montageposition gehalten. Das Federelement kann durch ein von außen bedienbares Element gelöst werden, sodass die Endkappe und der Dorn zum Wechseln der Wischleiste gelöst werden können. Im montierten Zustand stützt sich die Endkappe mit einer geschlossenen Stirnseite, die zum Ende des Wischblatts weist, an der zugeordneten Stirnseite der Brücke ab. Ein anderes Ausführungsbeispiel zeigt eine aus Blech gefertigte Halteeinheit, die mit einem zur Wischleiste gebogenen Dorn in die Wischleiste gedrückt wird. Bei der Montage der Federschienen wird die Halteeinheit unter die Brücke geschoben und zwischen Anschlagflächen und einer Federzunge an der Brücke verrastet. Die Federzunge kann nach Entfernen der Endkappe in eine Freigabeposition gedrückt werden, sodass die Federschienen demontiert werden können.

DE-A-19909971 offenbart den Oberbegriff des Anspruchs 1.

### Offenbarung der Erfindung

Nach der Erfindung weisen die Federschienen an den einander zugewandten Längsseiten in ihren Endbereichen Laschen mit Schneiden auf, die in montiertem Zustand in angrenzende Wände der Längsnuten einschneiden. Durch die Laschen mit den Schneiden sind die Federschienen gegenüber der Wischleiste in Längsrichtung ohne großen Aufwand direkt fixiert. Eine vorteilhafte Ausführung ergibt sich, wenn die Federschienen in ihren Endbereichen an den Längsseiten Aussparungen besitzen, die in montiertem Zustand einander gegenüberliegen und von denen Arme abzweigen, die unter einem flachen Winkel zur Längsrichtung nach außen gerichtet sind, wobei die Arme der Aussparungen mit den innen liegenden Längsseiten der Federschienen die Laschen bilden, die an der zur Aussparung weisenden Stirnseite zu einer Schneide geformt sind. Im montierten Zustand sind die Schneiden in den Steg zwischen den Längsnuten der Wischleiste gedrückt. Dies kann zweckmäßigerweise z.B. durch eine Endkappe geschehen, die auf das Ende der Federschienen geschoben wird und mit diesen verrastet.

Nach der Erfindung besitzen die Federschienen in ihren Endbereichen an den Längsseiten ebenfalls Aussparungen, die in montiertem Zustand einander gegenüberliegen, jedoch mindestens an einer Begrenzung in Längsrichtung Einschnitte aufweisen, die die Laschen bilden. Diese sind zu einer Breitseite der Federschienen höchgebogen und haben an den vorstehenden Kanten Schneiden. Wenn die Federschienen seitlich in die Längsnuten geschoben werden, verhaken sich die Schneiden in den Flanken der Längsnuten, sodass auch hierbei die Federschienen unmittelbar in Längsrichtung relativ zur Wischleiste fixiert sind. Die Längsschienen werden zweckmäßigerweise z.B. durch die Endkappe zusammengehalten. Grundsätzlich können die Laschen mit den Schneiden an beiden Enden der Federschienen vorgesehen werden, in der Regel genügt es jedoch, dass sie nur an einem Ende angeordnet sind, und zwar zweckmäßigerweise an dem äußeren Ende des Wischblatts, sodass die Wischleiste durch die Zentrifugalkraft während des Betriebs auf Druck beansprucht wird.

Nach der Erfindung ist ein Verbindungsstück mit seitlichen Führungsprofilen auf den Federschienen geführt und drückt diese zusammen. Federzungen an den Führungsprofilen rasten dabei im montierten Zustand in Aussparungen der Federschienen ein. Dadurch können die Schneiden in den Steg bzw. in die Flanken der Längsnuten der Wischleiste eingreifen, und diese in der Position halten. Die Federzungen sind in vorteilhafterweise durch Ausklinkungen aus einem der Schenkel der Führungsprofile gebildet und reichen jeweils bis zum gegenüberliegenden Schenkel. Durch Öffnungen in den Führungsprofilen können die Federzungen bei der Demontage des Verbindungsstücks aus der Rastposition in eine Freigabeposition verstellt werden. In der montierten Stellung liegen die Führungsprofile jeweils mit einem Haken an den Stirnseiten der Federschienen an. Der Haken ist aus einem verlängerten, umgebogenen Schenkel am äußeren Ende der Führungsprofile angeformt.

Zusätzlich zur Fixierung durch die Schneiden an den Laschen der Federschienen kann eine zweite Fixierung vorgesehen werden. Hierzu ist in einer Deckwand, die die Führungsprofile miteinander verbindet, ein Fenster vorgesehen, in das von einer Begrenzung aus eine Lasche ragt. Am freien Ende der Lasche befindet sich eine in Richtung auf die Kopfleiste umgebogene Kralle, die im montierten Zustand in die Kopfleiste eindringt. Zur Erleichterung der Montage des Verbindungsstücks sind die Schenkel der Führungsprofile an den den Federschienen zugewandten Enden nach außen aufgebogen. Das Verbindungsstück wird zweckmäßigerweise als Blechbiegeteil hergestellt. Es kann jedoch auch aus Kunststoff in einem Spritzgussverfahren gefertigt werden.

Dies trifft in umgekehrter Weise für ein Verbindungsstück gemäß einer weiteren Ausgestaltung der Erfindung zu. Das Verbindungsstück ist mit seitlichen Führungsprofilen auf den Federschienen geführt und drückt diese zusammen, wobei Zentrierblöcke an den Führungsprofilen im montierten Zustand in Aussparungen an den äußeren Längsseiten der Federschienen einrasten. Die Zentrierblöcke liegen an den Begrenzungen der Aussparungen in Längsrichtung an, sodass sie in beiden Richtungen relativ zu den Federschienen gesichert sind.

Die Führungsprofile sind durch eine Deckwand miteinander verbunden, die einen Längskanal für die Kopfleiste der Wischleiste besitzt, wobei in der Deckwand ein Fenster vorgesehen ist, in das eine Federzunge von einer Begrenzung aus ragt. An ihrem freien Ende ist ein Keilstück vorgesehen, das im montierten Zustand durch die Endkappe gegen die Kopfleiste gedrückt wird. Auch hierbei ist es zur leichteren Montage zweckmäßig, dass die stirnseitigen Innenkanten der Führungsprofile jeweils eine Fase aufweisen.

Weitere Ausführungsbeispiele und Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Darstellung eines Wischblatts,
Fig. 2 und Fig. 3 eine Draufsicht der Enden zweier in einer Ebene parallel zueinander und spiegelsymmetrisch angeordneter Federschienen im vergrößerten Maßstab,
Fig. 4 eine perspektivische Darstellung eines Endes eines Wischblatts mit einem lösbaren Verbindungsstück der Federschienen während der Montage,
Fig. 5 das Wischblatt nach Fig. 4 kurz vor Fertigstellung der Montage,
Fig. 6 und Fig. 7 eine Variante zu Fig. 4 und Fig. 5,
Fig. 8 und Fig. 9 eine weitere Variante zu Fig. 4 und Fig. 5,
Fig. 10 und Fig. 11 eine Wischleiste nach Fig. 4 und Fig. 5,
Fig. 12 und Fig. 13 eine weitere Variante nach Fig. 4 und Fig. 5,
Fig. 14 eine Variante mit einem Bügelklipp,
Fig. 15 eine Variante mit einem mit dem Tragelement formschlüssig verbundenen Verbindungsteil und
Fig. 16 eine Variante zu Fig. 15.

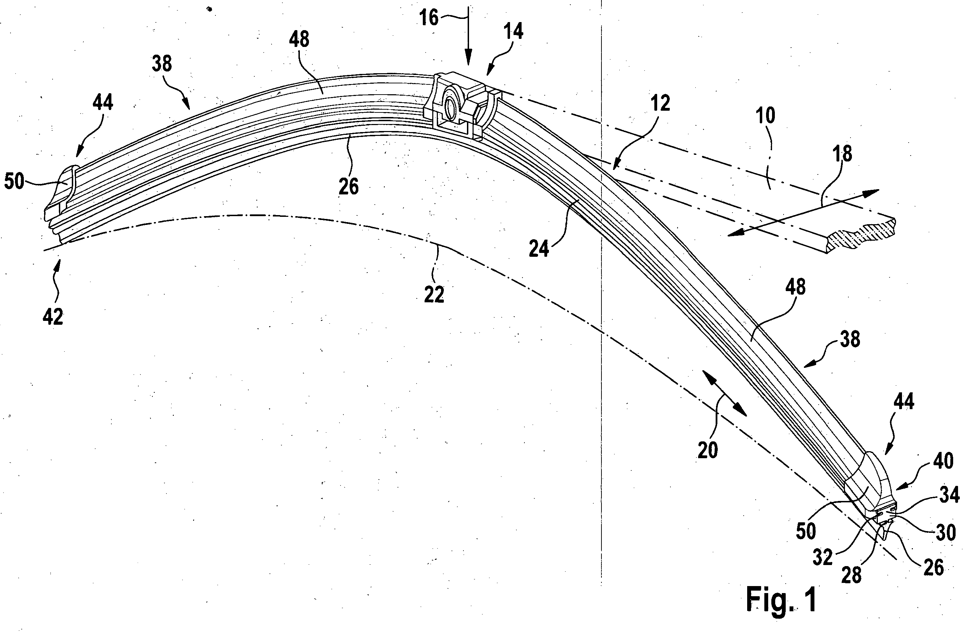

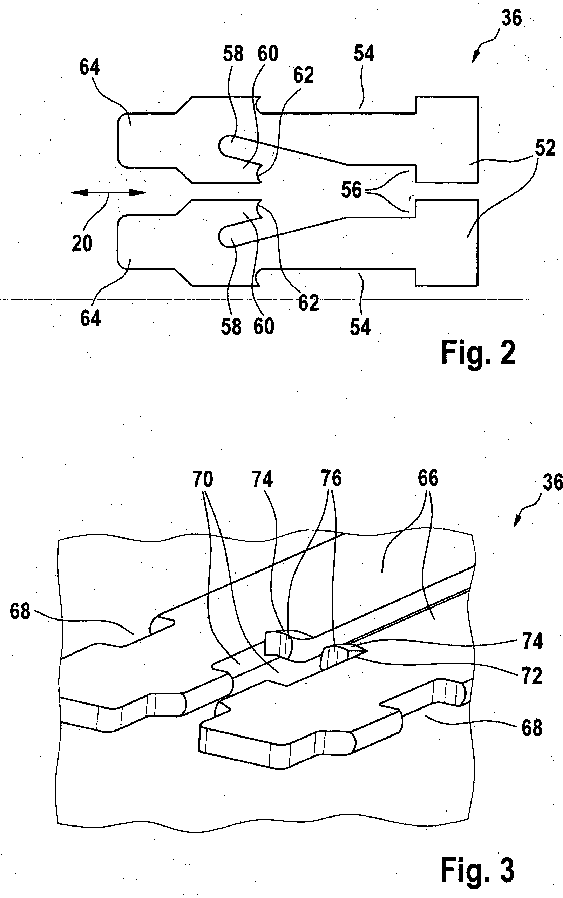

Ein Wischblatt 12 weist ein bandartig lang gestrecktes, federelastisches Tragelement 36 in Form zweier mit einem Abstand in einer Ebene parallel zueinander verlaufender Federschienen 52, 66 auf (Fig. 1 und Fig. 3). Diese sind mit ihren einander zugewandten, inneren Randstreifen in Längsnuten 32 einer Kopfleiste 30 einer Wischleiste 24 eingesetzt, während ihre äußeren Randstreifen ein Stück weit aus den Längsnuten 32 seitlich vorstehen. Zwischen den Längsnuten 32 befindet sich ein Steg 34.

Zu einer Fahrzeugscheibe 22 hin schließt sich an die Kopfleiste 30 über einen Kippsteg 28 eine Wischlippe 26 an, die während einer Wischbewegung in Richtung eines Doppelpfeils 18 über die Fahrzeugscheibe 22 gleitet. Hierzu treibt ein Wischarm 10 das Wischblatt 12 über eine Anschlussvorrichtung an, deren wischblattseitiger Teil 14 mit dem Wischarm 10 gelenkig und lösbar verbunden werden kann, während er im mittleren Bereich des Wischblatts 12 fest auf dessen Tragelement 36 sitzt. Gleichzeitig belastet der Wischarm 10 das Wischblatt 12 in Richtung auf die Fahrzeugscheibe 22 mit einer Anpresskraft 16. Der Wischarm 10 und die Fahrzeugscheibe 22 sind durch strichpunktierte Linien angedeutet. Während des Betriebs beschreiben die Enden 40, 42 des Wischblatts 12 bei einer Schwenkbewegung um eine nicht dargestellte Wischerwelle in Richtung des Doppelpfeils 18 Kreisbögen, wobei das innere Ende 40 einen inneren Kreisbogen und das äußere Ende 42 einen äußeren Kreisbogen beschreiben.

Die stärkste Krümmung der Fahrzeugscheibe 22 ist geringer als die Krümmung des mit seinen beiden Enden 40, 42 an der Fahrzeugscheibe 22 anliegenden, noch unbelasteten Wischblatts 12 (Fig. 1). Unter der Anpresskraft 16 legt sich das Wischblatt 12 mit seiner Wischlippe 26 über seine gesamte Länge an die Fahrzeugscheibe 22 an. Dabei baut sich in dem aus Metall oder Kunststoff gefertigten, federelastischen Tragelement 36 eine Spannung auf, welche für eine ordnungsgemäße Anlage der Wischleiste 24 bzw. der Wischlippe 26 über deren gesamte Länge an der Fahrzeugscheibe 22 sowie für eine gleichmäßige Verteilung des Anpressdrucks sorgt.

Zu beiden Seiten des wischblattseitigen Anschlusselements 14 schließen sich in Längsrichtung 20 Spoilerteile 38 an, die auf dem Tragelement 36 geführt sind. An den Enden 40, 42 des Wischblatts 12 sind Endkappen 44 vorgesehen, die ebenfalls auf dem Tragelement 36 geführt sind, an diesem verrasten und die Enden der Spoilerteile 38 abdecken. Die Spoilerteile 38 besitzen ein Strömungsprofil 48, während die Strömungsprofile der Endkappen 44 mit 50 gekennzeichnet sind.

Die Federschienen 52 bzw. 66 sind vorzugsweise nur an einem Ende, zweckmäßigerweise am äußeren Ende 42 des Wischblatts 12, relativ zur Wischleiste 24 fixiert. Hierzu besitzen die Federschienen 52 in ihren Endbereichen Aussparungen 56 an den Längsseiten, die in montiertem Zustand einander gegenüberliegen. Von diesen Aussparungen 56 zweigen Arme 58 ab, die unter einem flachen Winkel zur Längsrichtung 20 nach außen gerichtet sind. Die Arme 58 der Aussparungen 56 bilden mit den innen liegenden Längsseiten der Federschienen 52 Flügel 60, die an den zu den Aussparungen 56 weisenden Stirnseiten zu Schneiden 62 geformt sind, die dem Steg 34 zwischen den Längsnuten 32 der Wischleiste 24 benachbart sind. Bei der Montage werden die Enden der Federschienen 52 gegen den Steg 34 gepresst, sodass der Steg 34 ein Stück weit in die Aussparungen 56 eindringt und sich die Schneiden 62 im Steg 34 verhaken. Die Federschienen 52 werden durch geeignete Mittel, z.B. durch die Endkappe 44 zusammengehalten, die mit nicht näher dargestellten Rastmitteln in Aussparungen 54 an den äußeren Längsseiten der Federschienen 52 verrasten können. Die über die Aussparungen 56 bzw. über die Arme 58 in Längsrichtung 20 vorstehenden Abschnitte 64 der Federschienen 52 haben gegenüber den mittleren Abschnitten der Federschienen 52 eine reduzierte Breite.

Die Federschienen 66 nach Fig. 3 unterscheiden sich von den Federschienen 52 nach Fig. 2 dadurch, dass die einander gegenüberliegenden Aussparungen 70 an ihrem einen Ende in Längsrichtung einen Einschnitt 72 aufweisen, wodurch Lappen 74 gebildet werden. Die Lappen 74 der Federschienen 66 sind zu einer Breitseite der Federschienen 66 hochgebögen, wobei die vorstehenden Kanten als Schneiden 76 ausgebildet sind. Bei der Montage der Federschienen 66 quer zur Längsrichtung 20 der Wischleiste 24 dringen die Schneiden 76 in die angrenzenden Nutflanken der Längsnuten 32 ein und verhaken sich mit diesen, sodass die Federschienen 66 in Längsrichtung 20 relativ zu der Wischleiste 24 fixiert sind. Die Federschienen 66 werden dann durch geeignete Mittel zusammengehalten, z.B. durch die Endkappe 44, die sich in äußeren Aussparungen 68 verrastet.

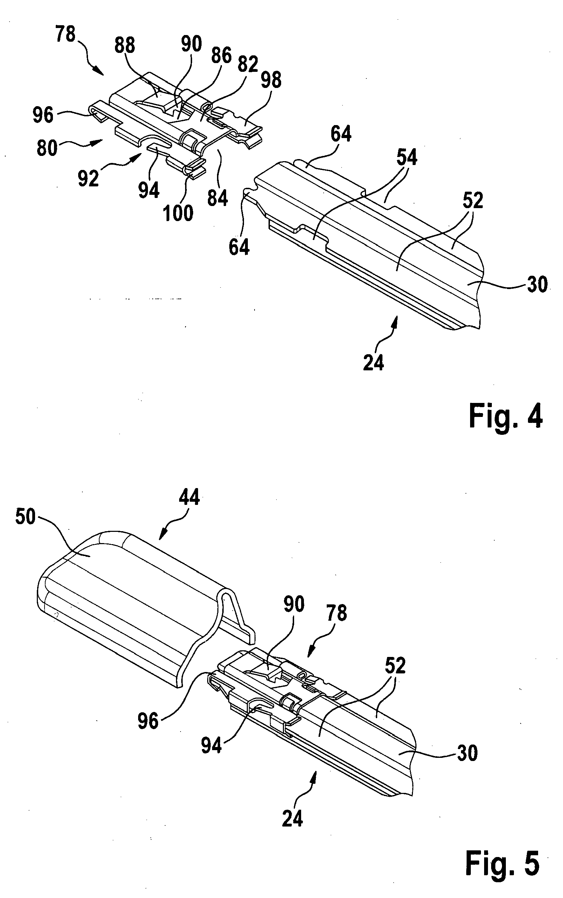

Nach einem Ausführungsbeispiel gemäß Fig. 4 und Fig. 5 hält anstelle der Endkappe 44 ein Verbindungsstück 78 die Federschienen 52 zusammen, sodass sie in Längsrichtung 20 relativ zur Wischleiste 24 fixiert sind. Das Verbindungsstück 78 besitzt an seinen Längsseiten Führungsprofile 80. Diese haben einen u-förmigen Querschnitt, der nach innen offen ist. Die Führungsprofile 80 sind durch eine Deckwand 82 miteinander verbunden, die im mittleren Bereich einen Längskanal 84 zur Aufnahme der Kopfleiste 30 besitzt. Bei der Montage wird das Verbindungsstück 78 von der Stirnseite auf die Federschienen 52 geschoben, bis Haken 96, die an den Enden der Führungsprofile 80 angeformt sind, an den Stirnseiten der Federschienen 52 anliegen (Fig. 5). In dieser Position rasten Federzungen 94 in die Aussparungen 54 der Federschienen 52 ein. Die Federzungen 94 sind jeweils aus einem der Schenkel 98, 100 des zugehörigen Führungsprofils 80 ausgeklinkt und zum gegenüberliegenden Schenkel 98, 100 abgewinkelt. Es ist zweckmäßig, dass das Führungsprofil 80 im Bereich der Federzunge 94 eine Öffnung 92 besitzt, sodass man die Federzunge 94 durch ein Werkzeug wieder lösen kann. Zur leichten Montage sind die Schenkel 98, 100 nach oben und unten entgegengesetzt zueinander ein wenig aufgebogen, sodass das Verbindungsstück 78 leicht über die Federschienen 52 geschoben werden kann. Die Deckwand 82 besitzt ein Fenster 86, in das eine Lasche 88 ragt, die an ihrem freien Ende eine abgewinkelte Kralle 90 besitzt. In der Endposition des Verbindungsstücks 78 wird die Kralle 90 in die Kopfleiste 30 der Wischleiste 24 gedrückt. Diese Fixierung kann zusätzlich oder alleine die relative Position der Wischleiste 24 zu den Federschienen 52 sichern. Das Verbindungsteil 78 wird zweckmäßiger Weise aus Blech gefertigt. Es kann jedoch auch aus Kunststoff hergestellt werden.

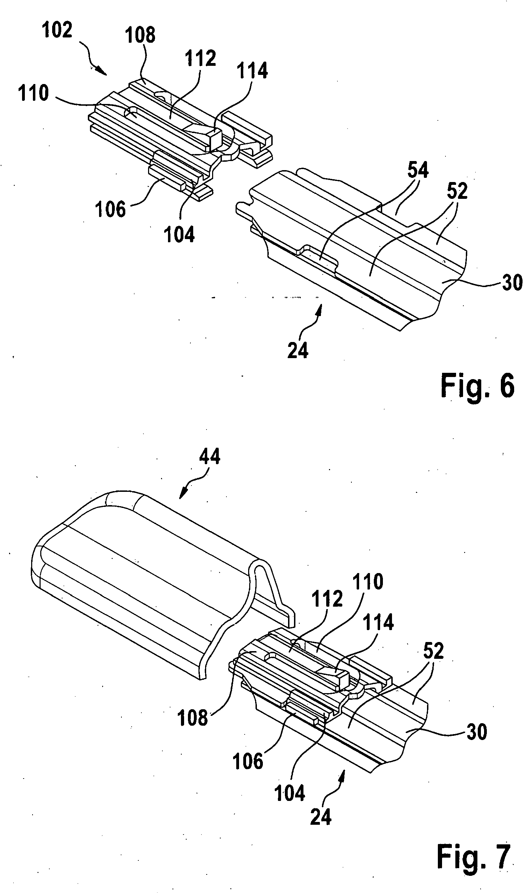

Bei dem Ausführungsbeispiel nach Fig. 6 und Fig. 7 ist ein ähnliches Verbindungsstück 102 vorgesehen, das zweckmäßiger Weise aus Kunststoff gefertigt ist. Es besitzt an seinen Längsseiten Führungsprofile 104 die durch eine Deckwand 108 miteinander verbunden sind. In dieser ist ein Fenster 110 vorgesehen, wobei eine Federzunge 112 von einer Begrenzung des Fensters 110 in das Fenster 110 hineinragt. Am freien Ende der Federzunge 112 ist ein Keilstück 114 angeformt, das zum Ende 42 des Wischblatts 12 geneigt zur Federzunge 112 verläuft. Das Verbindungsstück 102 weist im Bereich seiner Führungsprofile 104 Zentrierblöcke 106 auf, die in die Aussparungen 54 an den äußeren Längsseiten der Federschienen 52 passen. Bei der Montage wird das Verbindungsstück 102 stirnseitig auf die Federschienen 52 geschoben, wobei sich die Führungsprofile 104 seitlich aufweiten, bis die Führungsblöcke 106 in die Aussparungen 56 einrasten. Wenn die Endkappe 44 auf das Ende des Wischblatts 12 geschoben wird, drücken innen liegende, nicht sichtbare Verriegelungselemente auf das Keilstück 114 und drücken die Federzunge 112 auf die Kopfleiste 30, sodass das Tragelement 36 in Form der Federschienen 52 zusätzlich oder alleine zu der oben beschriebenen Fixierung relativ zur Wischleiste 24 gesichert ist. Das Verbindungsstück 102 wird zweckmäßiger Weise aus Kunststoff gefertigt. Es kann jedoch auch als Blechbiegeteil hergestellt werden.

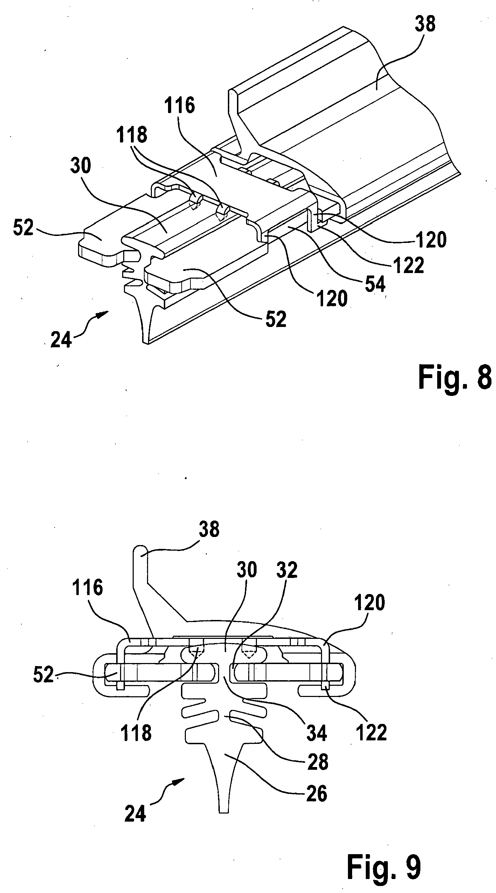

Bei der Ausführung nach Fig. 8 und Fig. 9 sind die Federschienen 52 durch einen Bügel 116 miteinander verspannt, der die Federschienen 52 im Bereich der äußeren Aussparungen 54 seitlich mit Krallen 118 umfasst, die an den Begrenzungen in Längsrichtung 20 der Aussparungen 54 anliegen, wobei in Längsrichtung 20 gerichtete, an den Krallen 118 angeformte Nasen 122 die Federschienen 52 von unten untergreifen. Weitere Krallen 118 an der Deckseite des Bügels 116 greifen im montierten Zustand von oben in die Kopfleiste 30 der Wischleiste 24 und stellen somit eine weitere Fixierung zwischen der Wischleiste 24 und den Federschienen 52 dar.

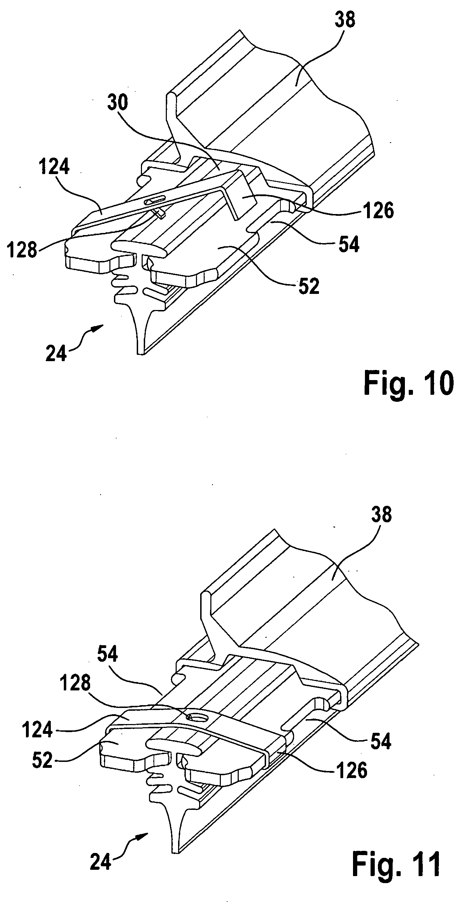

Das Ausführungsbeispiel nach Fig. 10 und Fig. 11 unterscheidet sich von dem vorhergehenden Ausführungsbeispiel dadurch, dass eine Spange 124 aus dünnem Blech über die Kopfleiste 30 gespannt wird, wobei die Schenkel 126 der Spange 124 um die äußeren Längsseiten der Federschienen 52 gebogen werden. Bei der Montage dringt ein Dorn 128, der aus dem mittleren Teil der Spange 124 ausgeklinkt und zur Kopfleiste 30 umgebogen ist, in die Kopfleiste 30 ein.

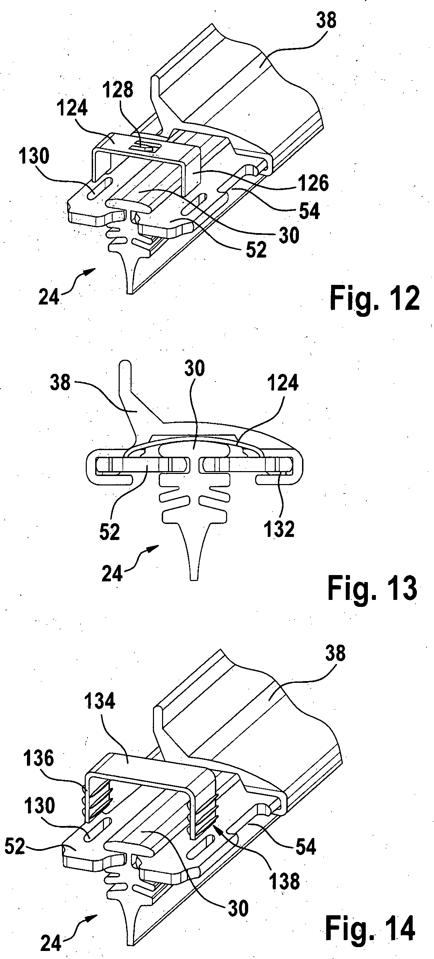

Das Ausführungsbeispiel nach Fig. 12 und Fig. 13 unterscheidet sich von dem Ausführungsbeispiel nach Fig. 10 und Fig. 11, dass die Federschienen 52 zwischen ihren Aussparungen 54 und dem äußeren Ende 42 Durchbrüche 130 aufweisen, durch die die Schenkel 126 der Spange 124 geführt sind und nach Passieren der Durchbrüche 130 vorzugsweise nach außen abgewinkelt werden.

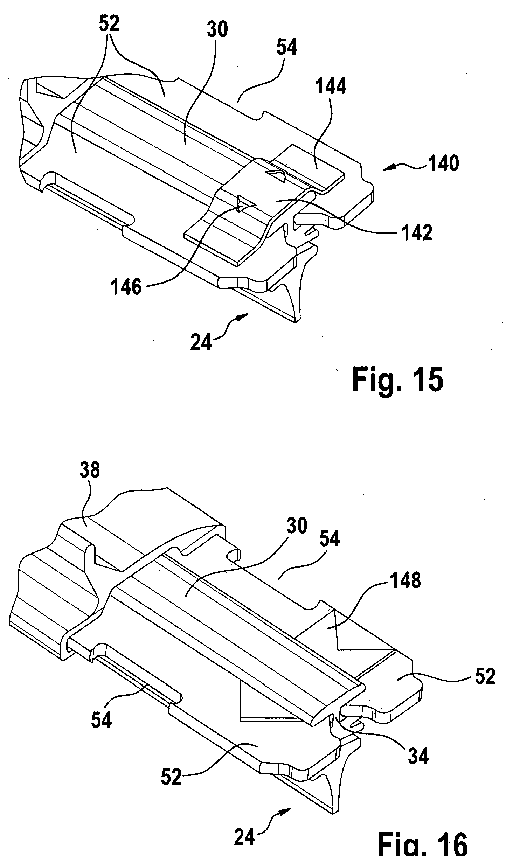

Das Ausführungsbeispiel nach Fig. 14 zeigt ein Verbindungsstück in Form eines Bügelklipps 134, dessen Schenkel 136 in Montagerichtung ein tannenbaumförmiges Profil 138 aufweisen. Die Schenkel 136 werden durch die Durchbrüche 130 gesteckt und durch das Profil 138 in ihrer Position gesichert. Bei den Ausführungen nach Fig. 15 und Fig. 16 werden die Federschienen 52 durch Verbindungsteile 140 bzw. 148 zusammengehalten, indem sie stoffschlüssig unter einer Vorspannung in der Ebene der Federschienen 52, quer zur Längsrichtung 20 mit den Federschienen 52 verbunden werden. Das Verbindungsteil 140 (Fig. 15) ist aus dünnem Blech brückenförmig gefertigt und wird vorzugsweise an seinen Füßen 144 durch Schweißen mit den Federschienen 52 verbunden. Im montierten Zustand drücken Nasen 146 auf die Kopfleiste 30 und sichern somit die Wischleiste 24 zusätzlich relativ zu den Federschienen 52.

Das Verbindungsteil 148 nach Fig. 16 ist pfeilförmig ausgebildet und weist vorzugweise eine dünne Wandstärke auf. Es wird zwischen dem Rücken der Kopfleiste 30 und den Oberseiten der Federschienen 52 durch den Steg 34 geschoben und sichert somit die relative Lage der Wischleiste 24 zu den Federschienen 52.

## Patentansprüche

1. Wischblatt (12) mit einem lang gestreckten, federelastischen, konkav zu einer Fahrzeugscheibe (22) vorgekrümmten Tragelement (36), das zwei in einer Ebene parallel zueinander verlaufende Federschienen (52, 66) aufweist, und mit einer Wischleiste (24), die mit einem Steg (34) ihrer Kopfleiste (30) von dem Tragelement (36) zwischen den Federschienen (52, 66) aufgenommen ist, die in Längsnuten (32) zu beiden Seiten des Steges (34) eingesetzt sind, wobei die Wischleiste (24) mindestens nahe einem ihrer Enden relativ zum Tragelement (36) in Längsrichtung (20) fixiert ist, **dadurch gekennzeichnet, dass** die Federschienen (52, 66) an den einander zugewandten Längsseiten in ihren Endbereichen Laschen (60, 74) mit Schneiden (62, 76) aufweisen, die im montierten Zustand in angrenzende Wände der Längsnuten (32) einschneiden, wobei ein Verbindungsstück (78) mit seitlichen Führungsprofilen (80) auf den Federschienen (52, 66) geführt ist und diese zusammendrückt, wobei Federzungen (94) an den Führungsprofilen (80) im montierten Zustand in Aussparungen (54, 68) der Federschienen (52, 66) einrasten und die Federschienen (66) in ihren Endbereichen an den Längsseiten Aussparungen (70) besitzen, die in montiertem Zustand einander gegenüberliegen und mindestens an einer ihrer Begrenzungen in Längsrichtung (20) Einschnitte (72) aufweisen, die Laschen (74) bilden, die zu einer Breitseite der Federschienen (66) hoch gebogen sind und an den vorstehenden Kanten Schneiden (76) aufweisen, mit denen sie sich im montierten Zustand in den Flanken der Längsnuten (32) verhaken.

2. Wischblatt (12) nach Anspruch 1, **dadurch gekennzeichnet, dass** die Federschienen (52) in ihren Endbereichen an den Längsseiten Aussparungen (56) besitzen, die in montiertem Zustand einander gegenüberliegen und von denen Arme (58) abzweigen, die unter einem flachen Winkel zur Längsrichtung (20) nach außen gerichtet sind, wobei die Arme (58) der Aussparungen (56) mit den innen liegenden Längsseiten der Federschienen (52) die Laschen (60) bilden, die an der zur Aussparung (56) weisenden Stirnseite jeweils zu einer Schneide (62) geformt sind, die im montierten Zustand in den Steg (34) zwischen den Längsnuten (32) der Wischleiste (24) gedrückt sind.

3. Wischblatt (12) nach einem der vorhergehenden Ansprüche, **dadurch gekennzeichnet, dass** die Laschen (60, 74) nur an dem äußeren Ende (42) des Wischblatts (12) angeordnet sind.

4. Wischblatt (12) nach einem der vorhergehenden Ansprüche, **dadurch gekennzeichnet, dass** eine Endkappe (44) die Federschienen (52, 66) in die Längsnuten (32) drückt, bis die Laschen (60) mit ihren Schneiden (62) in den Steg (34) eindringen bzw. bis die Laschen (74) sich in den Flanken der Längsnuten (32) verhaken.

5. Wischblatt (12) nach einem der vorhergehenden Ansprüche, **dadurch gekennzeichnet, dass** die Federzungen (94) im Bereich von Öffnungen (92) in den Führungsprofilen (80) durch Ausklinkungen in einem der Schenkel (98, 100) der Führungsprofile (80) gebildet sind und jeweils bis zum gegenüberliegenden Schenkel (98, 100) reichen.

6. Wischblatt (12) nach einem der vorhergehenden Ansprüche, **dadurch gekennzeichnet, dass** an den äußeren Enden der Führungsprofile (80) an einem der Schenkel (98, 100) Haken (96) angeformt sind, die im montierten Zustand an den Stirnseiten der Federschienen (52, 68) anliegen.

7. Wischblatt (12) nach einem der vorhergehenden Ansprüche, **dadurch gekennzeichnet, dass** die Führungsprofile (80) durch eine Deckwand (82) miteinander verbunden sind, die einen Längskanal (84) für eine Kopfleiste (30) der Wischleiste (24) besitzt, wobei in der Deckwand (82) ein Fenster (86) vorgesehen ist, in das von einer Begrenzung aus eine Lasche (88) ragt, die mit einer Kralle (90) an ihrem freien Ende im montierten Zustand in die Kopfleiste (30) eindringt.

8. Wischblatt (12) nach einem der vorhergehenden Ansprüche, **dadurch gekennzeichnet, dass** die Schenkel (98, 100) der Führungsprofile (80) an den den Federschienen (52) zugewandten Enden nach außen aufgebogen sind.

9. Wischblatt (12) nach einem der Ansprüche 1 bis 2, **dadurch gekennzeichnet, dass** ein Verbindungsstück (102) mit seitlichen Führungsprofilen (104) auf den Federschienen (52, 66) geführt ist und diese zusammendrückt, wobei Zentrierblöcke (106) an den Führungsprofilen (104) im montierten Zustand in Aussparungen (54, 68) an den äußeren Längsseiten der Federschienen (52, 66) einrasten.

10. Wischblatt (12) nach Anspruch 9, **dadurch gekennzeichnet, dass** die Führungsprofile (104) durch eine Deckwand (108) miteinander verbunden sind, die einen Längskanal für eine Kopfleiste (30) der Wischleiste (24) besitzt, wobei in der Deckwand (108) ein Fenster (110) vorgesehen ist, in das von einer Begrenzung aus eine Federzunge (112) ragt, die an ihrem freien Ende ein Keilstück (114) besitzt und im montierten Zustand durch die Endkappe (44) gegen die Kopfleiste (30) gedrückt wird.

11. Wischblatt (12) nach einem der vorhergehenden Ansprüche, **dadurch gekennzeichnet, dass** die stirnseitigen Innenkanten der Führungsprofile (104) eine Fase aufweisen.

12. Wischblatt (12) nach einem der Ansprüche 1 bis 11, **dadurch gekennzeichnet, dass** ein Bügel (116) die Federschienen (52, 66) zusammendrückt und zusammenhält, indem er die Federschienen (52, 65) im Bereich der Aussparungen (54, 68) mit Krallen (120) umfasst, die mit Begrenzungen der Aussparungen (54, 68) verrasten.

13. Wischblatt (12) nach Anspruch 12, **dadurch gekennzeichnet, dass** die Krallen (120) in Längsrichtung (20) gerichtete Nasen (122) besitzen, die die Federschienen (52, 66) von unten untergreifen.

14. Wischblatt (12) nach Anspruch 12 oder 13, **dadurch gekennzeichnet, dass** der Bügel (116) an seinen in Längsrichtung (20) gerichteten Stirnseiten Krallen (118) besitzt, die im montierten Zustand in die zugewandte Seite der Kopfleiste (30) eindringen.

15. Wischblatt (12) nach einem der Ansprüche 1 bis 3, **dadurch gekennzeichnet, dass** eine Spange (124) das Ende der Federschienen (52, 66) außerhalb der Aussparungen (54, 68) mit ihren nach innen umgebogenen Schenkeln (126) umspannt, wobei im montierten Zustand ein Dorn (128) in die Kopfleiste (30) eingreift.

16. Wischblatt (12) nach einem der Ansprüche 1 bis 3, **dadurch gekennzeichnet, dass** Schenkel (126) einer Spange (124) durch Durchbrüche (130) geführt und ihre Enden nach außen umgebogen sind.

17. Wischblatt (12) nach einem der Ansprüche 1 bis 3, **dadurch gekennzeichnet, dass** Schenkel (135) eines Bügelklipps (134) durch Durchbrüche (130) an den Enden der Federschienen (52, 66) geführt sind und tannenbaumförmige Profile (138) mit den Durchbrüchen (130) verrasten.

18. Wischblatt (12) nach einem der Ansprüche 1 bis 3, **dadurch gekennzeichnet, dass** die Federschienen (52, 66) durch ein brückenförmiges Verbindungsteil (140) mit einer geringen Materialstärke verspannt sind, wobei Füße (144) mit den Federschienen (52, 66) verklebt oder verschweißt sind und an einen Mittelabschnitt (142) des Verbindungsteils (140) Nasen (146) angeformt sind, die im montierten Zustand in die Kopfleiste (30) eingreifen.

19. Wischblatt (12) nach einem der Ansprüche 1 bis 3, **dadurch gekennzeichnet, dass** ein pfeilförmiges Verbindungsteil (148) zwischen dem über die Federschienen (52, 66) vorstehenden Teil der Kopfleiste (30) und den Federschienen (52, 66) quer zum Steg (34) durch diesen geführt und durch Kleben oder Schweißen mit den Federschienen (52, 66) verbunden ist.

## Claims

1. Wiper blade (12) with an elongate, spring-elastic supporting element (36) which is pre-curved concavely with respect to a vehicle window (22) and has two spring rails (52, 66) running parallel to each other in a plane, and with a wiper strip (24) which is accommodated with a web (34) of its top strip (30) by the supporting element (36) between the spring rails (52, 66) which are inserted in longitudinal grooves (32) on both sides of the web (34), wherein the wiper strip (24) is fixed at least in the vicinity of one of its ends in the longitudinal direction (20) relative to the supporting element (36), **characterized in that** the spring rails (52, 66), in their end regions in the mutually facing longitudinal sides, have tabs (60, 74) having cutting edges (62, 76) which, in the mounted state, cut into adjacent walls of the longitudinal grooves (32), wherein a connecting piece (78) is guided with lateral guide profiles (80) on the spring rails (52, 66) and compresses the latter, wherein, in the mounted state, spring tongues (94) on the guide profiles (80) latch into recesses (54, 68) of the guide rails (52, 66), and the spring rails (66), in their end regions on the longitudinal sides, have recesses (70) which, in the mounted state, lie opposite one another and, at least at one of their boundaries in the longitudinal direction (20), have incisions (72) which form tabs (74) which are bent up with respect to a wide side of the spring rails (66) and, on the protruding edges, have cutting edges (76) with which said tabs interlock in the flanks of the longitudinal grooves (32) in the mounted state.

2. Wiper blade (12) according to Claim 1, **characterized in that** the spring rails (52), in their end regions on the longitudinal sides, have recesses (56) which, in the mounted state, lie opposite one another and from which arms (58) branch off, said arms being directed outwards at a shallow angle with respect to the longitudinal direction (20), wherein the arms (58) of the recesses (56), together with the inner longitudinal sides of the spring rails (52), form the tabs (60) which are in each case shaped on the end side facing the recess (56) to form a cutting edge (62), which cutting edges, in the mounted state, are pressed into the web (34) between the longitudinal grooves (32) of the wiper strip (24).

3. Wiper blade (12) according to either of the preceding claims, **characterized in that** the tabs (60, 74) are arranged only at the outer end (42) of the wiper blade (12).

4. Wiper blade (12) according to one of the preceding claims, **characterized in that** an end cap (44) presses the spring rails (52, 66) into the longitudinal grooves (32) until the tabs (60) penetrate with their coupling edges (62) into the web (34) or until the tabs (74) interlock in the flanks of the longitudinal grooves (32).

5. Wiper blade (12) according to one of the preceding claims, **characterized in that** the spring tongues (94) are formed in the region of openings (92) in the guide profiles (80) by notches in one of the limbs (98, 100) of the guide profiles (80) and in each case reach as far as the opposite limb (98, 100).

6. Wiper blade (12) according to one of the preceding claims, **characterized in that**, at the outer ends of the guide profiles (80), hooks (96) are integrally formed on one of the limbs (98, 100), said hooks, in the mounted state, lying against the end sides of the spring rails (52, 68).

7. Wiper blade (12) according to one of the preceding claims, **characterized in that** the guide profiles (80) are connected to each other by a cover wall (82) which has a longitudinal channel (84) for a top strip (30) of the wiper strip (24), wherein the cover wall (82) is provided with a window (86) into which a tab (88) projects from a boundary, said tab penetrating with a claw (90) at its free end into the top strip (30) in the mounted state.

8. Wiper blade (12) according to one of the preceding claims, **characterized in that** the limbs (98, 100) of the guide profiles (80) are bent up outwards at the ends facing the spring rails (52).

9. Wiper blade (12) according to either of Claims 1 and 2, **characterized in that** a connecting piece (102) is guided with lateral guide profiles (104) on the spring rails (52, 66) and compresses the latter, wherein, in the mounted state, centring blocks (106) on the guide profiles (104) latch into recesses (54, 68) on the outer longitudinal sides of the spring rails (52, 66).

10. Wiper blade (12) according to Claim 9, **characterized in that** the guide profiles (104) are connected to each other by a cover wall (108) which has a longitudinal channel for a top strip (30) of the wiper strip (24), wherein the cover wall (108) is provided with a window (110) into which a spring tongue (112) projects from a boundary, said spring tongue, at its free end, having a wedge piece (114) and, in the mounted state, being pressed by the end cap (44) against the top strip (30).

11. Wiper blade (12) according to one of the preceding claims, **characterized in that** the end-side inner edges of the guide profiles (104) have a bevel.

12. Wiper blade (12) according to one of Claims 1 to 11, **characterized in that** a stirrup (116), compresses and holds the spring rails (52, 66) together by encompassing the spring rails (52, 65) in the region of the recesses (54, 68) with claws (120) which latch together with boundaries of the recesses (54, 68).

13. Wiper blade (12) according to Claim 12, **characterized in that** the claws (120) have lugs (122) which are directed in the longitudinal direction (20) and grip the spring rails (52, 66) from below.

14. Wiper blade (12) according to Claim 12 or 13, **characterized in that** the stirrup (116), on its end sides directed in the longitudinal direction (20), has claws (118) which, in the mounted state, penetrate the facing side of the top strip (30).

15. Wiper blade (12) according to one of Claims 1 to 3, **characterized in that** a clasp (124), with its limbs (126) which are bent over inwards, clasps the end of the spring rails (52, 66) outside the recesses (54, 68), wherein, in the mounted state, a spike (128) engages in the top strip (30).

16. Wiper blade (12) according to one of Claims 1 to 3, **characterized in that** limbs (126) of a clasp (124) are guided through apertures (130) and their ends are bent over outwards.

17. Wiper blade (12) according to one of Claims 1 to 3, **characterized in that** limbs (135) of a stirrup clip (134) are guided through apertures (130) at the ends of the spring rails (52, 66) and Christmastree-shaped profiles (138) latch together with the apertures (130).

18. Wiper blade (12) according to one of Claims 1 to 3, **characterized in that** the spring rails (52, 66) are braced by a bridge-shaped connecting part (140) having a small material thickness, wherein feet (144) are adhesively bonded or welded to the spring rails (52, 66), and lugs (146) are integrally formed on a central section (142) of the connecting part (140), said lugs, in the mounted state, engaging in the top strip (30).

19. Wiper blade (12) according to one of Claims 1 to 3, **characterized in that** an arrow-shaped connecting part (148) between that part of the top strip (30) which protrudes over the spring rails (52, 66) and the spring rails (52, 66) is guided through the web (34) transversely with respect thereto and is connected to the spring rails (52, 66) by adhesive bonding or welding.

## Revendications

1. Balai d'essuie-glace (12) comprenant un élément porteur (36) allongé, élastique à ressort, précintré de manière concave par rapport à un pare-brise de véhicule (22), qui présente deux rails élastiques (52, 66) s'étendant parallèlement l'un à l'autre dans un plan, et comprenant une raclette de balai d'essuie-glace (24) qui est reçue avec une nervure (34) de sa raclette de tête (30) par l'élément porteur (36) entre les rails élastiques (52, 66), lesquels rails élastiques sont insérés dans des rainures longitudinales (32) des deux côtés de la nervure (34), la raclette de balai d'essuie-glace (24) étant fixée au moins à proximité de l'une de ses extrémités par rapport à l'élément porteur (36) dans la direction longitudinale (20), **caractérisé en ce que** les rails élastiques (52, 66) présentent, au niveau des côtés longitudinaux tournés l'un vers l'autre dans leurs régions d'extrémité, des pattes (60, 74) avec des tranchants (62, 76) qui, dans l'état monté, mordent dans des parois adjacentes des rainures longitudinales (32), une pièce de connexion (78) avec des profils de guidage latéraux (80) étant guidée sur les rails élastiques (52, 66) et comprimant ceux-ci, des langues élastiques (94) s'encliquetant au niveau des profils de guidage (80) dans l'état monté dans des évidements (54, 68) des rails élastiques (52, 66) et les rails élastiques (66) possédant, dans leurs régions d'extrémité au niveau des côtés longitudinaux, des évidements (70) qui sont opposés l'un à l'autre dans l'état monté et qui présentent au moins au niveau de l'une de leurs limitations dans la direction longitudinale (20) des entailles (72) qui forment des pattes (74) qui sont cintrées vers le haut vers un côté large des rails élastiques (66) et qui présentent au niveau des arêtes saillantes des tranchants (76) avec lesquels elles s'accrochent dans l'état monté dans les flancs des rainures longitudinales (32).

2. Balai d'essuie-glace (12) selon la revendication 1, **caractérisé en ce que** les rails élastiques (52) possèdent, dans leurs régions d'extrémité au niveau des côtés longitudinaux, des évidements (56) qui sont opposés l'un à l'autre dans l'état monté et depuis lesquels partent des bras (58) qui sont orientés vers l'extérieur suivant un angle plat par rapport à la direction longitudinale (20), les bras (58) des évidements (56) formant avec les côtés longitudinaux situés à l'intérieur des rails élastiques (52) les pattes (60) qui sont formées au niveau du côté frontal tourné vers l'évidement (56) à chaque fois pour former un tranchant (62), lesquels tranchants, dans l'état monté, sont pressés dans la nervure (34) entre les rainures longitudinales (32) de la raclette de balai d'essuie-glace (24).

3. Balai d'essuie-glace (12) selon l'une quelconque des revendications précédentes, **caractérisé en ce que** les pattes (60, 74) sont disposées seulement à l'extrémité extérieure (42) du balai d'essuie-glace (12).

4. Balai d'essuie-glace (12) selon l'une quelconque des revendications précédentes, **caractérisé en ce qu'**un capuchon d'extrémité (44) presse les rails élastiques (52, 66) dans les rainures longitudinales (32) jusqu'à ce que les pattes (60) pénètrent avec leurs tranchants (62) dans la nervure (34) ou jusqu'à ce que les pattes (74) s'accrochent dans les flancs des rainures longitudinales (32).

5. Balai d'essuie-glace (12) selon l'une quelconque des revendications précédentes, **caractérisé en ce que** les langues élastiques (94) sont formées dans la région d'ouvertures (92) dans les profils de guidage (80) par des encoches dans l'une des branches (98, 100) des profils de guidage (80) et s'étendent à chaque fois jusqu'à la branche opposée (98, 100).

6. Balai d'essuie-glace (12) selon l'une quelconque des revendications précédentes, **caractérisé en ce qu'**aux extrémités extérieures des profils de guidage (80) au niveau de l'une des branches (98, 100) sont façonnés des crochets (96) qui, dans l'état monté, s'appliquent contre les côtés frontaux des rails élastiques (52, 68).

7. Balai d'essuie-glace (12) selon l'une quelconque des revendications précédentes, **caractérisé en ce que** les profils de guidage (80) sont connectés l'un à l'autre par une paroi de recouvrement (82) qui possède un canal longitudinal (84) pour une raclette de tête (30) de la raclette de balai d'essuie-glace (24), une fenêtre (86) étant prévue dans la paroi de recouvrement (82), dans laquelle une patte (88) fait saillie depuis une limitation, laquelle pénètre dans l'état monté dans la raclette de tête (30) avec une griffe (90) au niveau de son extrémité libre.

8. Balai d'essuie-glace (12) selon l'une quelconque des revendications précédentes, **caractérisé en ce que** les branches (98, 100) des profils de guidage (80) sont recourbées vers l'extérieur au niveau des extrémités tournées vers les rails élastiques (52).

9. Balai d'essuie-glace (12) selon l'une quelconque des revendications 1 à 2, **caractérisé en ce qu'**une pièce de connexion (102) avec des profils de guidage latéraux (104) est guidée sur les rails élastiques (52, 66) et les comprime, des blocs de centrage (106) au niveau des profils de guidage (104) s'encliquetant dans l'état monté dans des évidements (54, 68) au niveau des côtés longitudinaux extérieurs des rails élastiques (52, 66).

10. Balai d'essuie-glace (12) selon la revendication 9, **caractérisé en ce que** les profils de guidage (104) sont connectés l'un à l'autre par une paroi de recouvrement (108) qui possède un canal longitudinal pour une raclette de tête (30) de la raclette de balai d'essuie-glace (24), une fenêtre (110) étant prévue dans la paroi de recouvrement (108), dans laquelle une langue élastique (112) fait saillie depuis une limitation, laquelle langue élastique possède au niveau de son extrémité libre une pièce en forme de cale (114) et, dans l'état monté, est pressée par le capuchon d'extrémité (44) contre la raclette de tête (30).

11. Balai d'essuie-glace (12) selon l'une quelconque des revendications précédentes, **caractérisé en ce que** les arêtes internes du côté frontal des profils de guidage (104) présentent un biseau.

12. Balai d'essuie-glace (12) selon l'une quelconque des revendications 1 à 11, **caractérisé en ce qu'**un étrier (116) comprime et retient ensemble les rails élastiques (52, 66) par le fait qu'il entoure les rails élastiques (52, 65) dans la région des évidements (54, 68) avec des griffes (120) qui s'encliquètent avec des limitations des évidements (54, 68).

13. Balai d'essuie-glace (12) selon la revendication 12, **caractérisé en ce que** les griffes (120) possèdent des ergots (122) orientés dans la direction longitudinale (20) qui viennent en prise par le dessous avec les rails élastiques (52, 66).

14. Balai d'essuie-glace (12) selon la revendication 12 ou 13, **caractérisé en ce que** l'étrier (116) possède au niveau de ses côtés frontaux orientés dans la direction longitudinale (20) des griffes (118) qui, dans l'état monté, pénètrent dans le côté de la raclette de tête (30) tourné vers celles-ci.

15. Balai d'essuie-glace (12) selon l'une quelconque des revendications 1 à 3, **caractérisé en ce qu'**une pince (124) enserre l'extrémité des rails élastiques (52, 66) à l'extérieur des évidements (54, 68) avec ses branches (126) recourbées vers l'intérieur, un picot (128) s'engageant dans l'état monté dans la raclette de tête (30).

16. Balai d'essuie-glace (12) selon l'une quelconque des revendications 1 à 3, **caractérisé en ce que** des branches (126) d'une pince (124) sont guidées à travers des orifices (130) et leurs extrémités sont recourbées vers l'extérieur.

17. Balai d'essuie-glace (12) selon l'une quelconque des revendications 1 à 3, **caractérisé en ce que** des branches (135) d'un clip d'étrier (134) sont guidées à travers des orifices (130) au niveau des extrémités des rails élastiques (52, 66) et des profils en forme de sapin (138) s'encliquètent avec les orifices (130).

18. Balai d'essuie-glace (12) selon l'une quelconque des revendications 1 à 3, **caractérisé en ce que** les rails élastiques (52, 66) sont serrés par une pièce de connexion en forme de pont (140) ayant une faible épaisseur de matériau, des pieds (144) étant collés ou soudés aux rails élastiques (52, 66) et des ergots (146) étant façonnés au niveau d'une portion centrale (142) de la pièce de connexion (140), lesquels s'engagent dans l'état monté dans la raclette de tête (30).

19. Balai d'essuie-glace (12) selon l'une quelconque des revendications 1 à 3, **caractérisé en ce qu'**une pièce de connexion en forme de flèche (148) est guidée entre la partie de la raclette de tête (30) faisant saillie au-delà des rails élastiques (52, 66) et les rails élastiques (52, 66) transversalement à la nervure (34) et à travers celle-ci et est connectée par collage ou soudage aux rails élastiques (52, 66).
